# EUROPÄISCHE PATENTSCHRIFT

(11) **EP 0 523 398 B1**
(45) Veröffentlichungstag und Bekanntmachung des Hinweises auf die Patenterteilung: **11.12.1996**
(21) Anmeldenummer: 92110451.9
(22) Anmeldetag: 20.06.1992
(51) Int. Cl.: C08J 9/14

(54) **Verfahren zur Herstellung von Urethan- oder Urethan- und Isocyanuratgruppen enthaltenden Hartschaumstoffen und Treibmittel enthaltende Emulsionen hierfür**
Process for producing urethane or urethane and isocyanurate groups containing rigid foams, and blowing agent containing emulsions according to this process
Procédé de préparation de mousses rigides contenant des groupes uréthane ou uréthane et isocyanurate, et émulsions contenant un agent d'expansion selon ce procédé

(30) Priorität: 27.06.1991 DE 4121161
(43) Veröffentlichungstag der Anmeldung: 20.01.1993
(73) Patentinhaber: BASF Aktiengesellschaft, 67063 Ludwigshafen (DE)
(72) Erfinder: Volkert, Otto, Dr., W-6719 Weisenheim (DE)

(56) Entgegenhaltungen:
- EP-A- 520 860

## Beschreibung

Gegenstand der Erfindung sind ein Verfahren zur Herstellung von Urethan- oder Urethan- und Isocyanuratgruppen enthaltenden Hartschaumstoffen durch Umsetzung der Aufbaukomponenten (a), (b) sowie gegebenenfalls (c), bei dem als Treibmittel mindestens ein Vinylfluoralkan der Formel

CH₂=CH-CₙF₂ₙ₊₁ ,

in der n eine ganze Zahl von 1 bis 6 bedeutet, (di) oder Mischungen, die bestehen aus mindestens einem derartigen Vinylfluoralkan (di) und mindestens einem weiteren, von (di) verschiedenen, physikalisch und/oder chemisch wirkenden Treibmittel (dii), eingesetzt werden, sowie treibmittelhaltige Emulsionen, die mindestens ein Vinylfluoralkan (di) oder Mischungen von (di) mit mindestens einem anderen Treibmittel (dii) und mindestens eine der Aufbaukomponenten (a), (b) oder (c) oder (b) und (c) enthalten.

Die Herstellung von Urethangruppen enthaltenden Schaumstoffen - im folgenden abgekürzt PU-Schaumstoffe genannt - mit den verschiedenartigsten mechanischen Eigenschaften durch Umsetzung von höhermolekularen Polyhydroxylverbindungen und gegebenenfalls niedermolekularen Kettenverlängerungs- oder Vernetzungsmitteln mit organischen Polyisocyanaten in Gegenwart von Katalysatoren, Treibmitteln und gegebenenfalls Hilfsmitteln und/oder Zusatzstoffen ist bekannt und wird in zahlreichen Patent- und Literaturveröffentlichungen beschrieben. Bei geeigneter Wahl der Aufbaukomponenten lassen sich nach diesen Verfahren sowohl weiche, elastische wie halbharte oder harte PU-Schaumstoffe herstellen.

Die Herstellung von Urethan- und Isocyanuratgruppen gebunden enthaltenden Schaumstoffen ist ebenfalls nicht neu. Nach diesem Verfahren werden organische Polyisocyanate in Gegenwart von Katalysatoren partiell cyclisiert und polymerisiert und die erhaltenen Isocyanuratgruppen (PIR) enthaltenden Polyisocyanate danach mit Polyhydroxylverbindungen in Gegenwart von PU-Katalysatoren und Treibmitteln zur Reaktion gebracht. Nach einer anderen Verfahrensweise werden die organischen Polyisocyanate in Gegenwart von unterschüssigen Mengen an Polyhydroxylverbindungen, verschiedenartig wirkenden Katalysatoren und Treibmitteln gleichzeitig partiell cyclisiert und die Polyhydroxylverbindungen an die gebildeten isocyanuratgruppenhaltigen und unmodifizierten Polyisocyanate addiert.

Eine zusammenfassende übersicht über die Herstellung von PU-Hartschaumstoffen und PU-PIR-Schaumstoffen wird z.B. publiziert in der Monographie von J.H. Saunders und K.C. Frisch "High Polymers", Band XVI, Polyurethanes, Teile 1 und 2, Verlag Interscience Publishers 1962 bzw. 1964 oder dem Kunststoff-Handbuch, Band VII, Polyurethane, Carl-Hanser Verlag, München, 1. Auflage 1966 und 2. Auflage 1983.

Bekannt ist ferner die Verwendung derartiger PU- oder PU-PIR-Hartschaumstoffe zur Herstellung von Verbund- oder Sandwichelementen, die üblicherweise aufgebaut sind aus einem Hartschaumstoff und mindestens einer, vorzugsweise zwei Deckschichten aus einem starren oder elastischen Material, wie z.B. Papier, Kunststoffolien, Metallblechen, Glasvliesen, Spanplatten u.a., sowie die Ausschäumung von Hohlräumen in Haushaltgeräten, wie Kühlmöbeln, beispielsweise Kühlschränken oder -truhen, oder von Heißwasserspeichern mit solchen Hartschaumstoffen als Wärmedämmstoff.

Als Treibmittel zur Herstellung der wärme- und kältedämmenden PU- oder PU-PIR-Hartschaumstoffe werden weltweit in großem Maßstab Fluorchloralkane, vorzugsweise Trichlorfluormethan, eingesetzt. Nachteilig an diesen Treibgasen ist lediglich die Belastung der Umwelt, da sie in Verdacht stehen, in der Stratosphäre am Abbau der Ozonschicht beteiligt zu sein.

Zur Reduzierung der Fluorchloralkane wird als Treibgas vorwiegend Wasser eingesetzt, das mit dem Polyisocyanat unter Kohlendioxidentwicklung reagiert, welches als eigentliches Treibmittel wirkt. Nachteilig an solchen PU-Hartschaum-Formulierungen ist der große Polyisocyanatverbrauch allein für die Reaktion des Wassers zur Bildung des Kohlendioxids. Nachteilig ist ferner eine Verschlechterung der Wärmeisolationseigenschaften aufgrund der höheren Wärmeleitfähigkeit des Zellgases Kohlendioxid im Vergleich zu Fluorchloralkanen.

Nach Angaben der EP-A-351 614 können als Treibmittel ferner fluorierte Kohlenwasserstoffe, perfluorierte Kohlenwasserstoffe, Schwefelhexafluorid oder Mischungen aus mindestens zwei dieser Verbindungen verwendet werden. Da diese fluorierten oder perfluorierten Treibmittel in den Aufbaukomponenten zur Herstellung der Polyisocyanat-Polyadditionsprodukte schwer-oder unlöslich sind, werden sie in mindestens einem organischen und/oder modifizierten organischen Polyisocyanat, mindestens einer höhermolekularen Verbindung mit mindestens zwei reaktiven Wasserstoffatomen oder einer Mischung aus mindestens einer höhermolekularen Verbindung mit mindestens zwei reaktiven Wasserstoffatomen und einem niedermolekularen Kettenverlängerungs- und/oder Vernetzungsmittel emulgiert. Nach dieser Methode können zellige Kunststoffe mit gleichmäßiger und feiner Zellstruktur hergestellt werden. Nachteilig an diesem Verfahren ist die geringe Auswahl an geeigneten fluorierten oder perfluorierten Verbindungen mit einem Siedepunkt in dem erforderlichen Siedepunktsbereich und der hohe Preis für diese Treibmittel. Um zellhaltige Kunststoffe mit der technisch gewünschten Zellstruktur zu erhalten, ist man auf eine eng begrenzte Auswahl von Mischungen aus Perfluorpentan und Perfluorhexan angewiesen. Nachteilig ist ferner, daß derartige Treibmittel chemisch relativ resistent sind, in der Atmosphäre nur langsam abgebaut werden und deshalb zur Erwärmung der Erdatmosphäre beitragen können.

Als Treibmittel verwendbare niedrigsiedende Kohlenwasserstoffe sind in den Aufbaukomponenten zur Herstellung der Polyisocyanat-Polyadditionsprodukte löslich und ergeben Schaumstoffe mit einer gröberen, vielfach uneinheitlichen Zellstruktur und erhöhten Wärmeleitfähigkeit.

Der Mechanismus der Schaumbildung bei der Herstellung von Polyisocyanat-Polyadditionsprodukten und der Einfluß von oberflächenaktiven Hilfsmitteln auf der Grundlage von Siloxan-oxalkylen-copolymeren auf diese Reaktion wurde von B. Kanner et al. (J. of cellular Plastics, January 1969, Seiten 32 bis 39) beschrieben.

Die Aufgabe der vorliegenden Erfindung bestand darin, die als Treibmittel zur Herstellung von PU- oder PU-PIR-Hartschaumstoffen bekannten Fluorchlorkohlenwasserstoffe ganz oder zumindest teilweise durcn andere, umweltfreundliche Treibmittel zu ersetzen, ohne dadurch die feinzellige Schaumstruktur, wie sie mit Emulsionen auf Basis von fluorierten Kohlenwasserstoffen erzielt werden kann, negativ zu beeinflussen.

Diese Aufgabe konnte überraschenderweise gelöst werden durch die Verwendung von fluorierten Olefinen als Treibmittel.

Gegenstand der Erfindung ist somit ein Verfahren zur Herstellung von Urethangruppen oder Urethan- und Isocyanuratgruppen enthaltenden Hartschaumstoffen durch Umsetzung von
a) organischen und/oder modifizierten organischen Polyisocyanaten mit
b) mindestens einer Verbindung mit mindestens zwei reaktiven Wasserstoffatomen, ausgewählt aus Polyether-polyolen, Polyesterpolyolen, Polycarbonaten, Polyesteramiden oder Polyacetalen mit einer Funktionalität von 2 bis 8 und einer Hydroxylzahl von 150 bis 850, Polyesterpolyolen mit einer Funktionalität von 2 bis 3 und einem Molekulargewicht von 480 bis 3000 oder Polyetherpolyolen mit einer Funktionalität von 2 bis 6 und einem Molekulargewicht von 400 bis 8000 und gegebenenfalls
c) als niedermolekularen Kettenverlängerungs- und Vernetzungsmitteln Alkanolamine, Diole oder Triole mit einem Molekulargewicht kleiner als 400
in Gegenwart von
d) Treibmitteln,
e) Katalysatoren und gegebenenfalls
f) Hilfsmitteln und/oder Zusatzstoffen,
das dadurch gekennzeichnet ist, daß man als
Treibmittel (d) mindestens ein Vinylfluoralkan der Formel

CH₂=CH-CₙF₂ₙ₊₁ ,

in der n eine ganze Zahl von 1 bis 6 bedeutet, (di) verwendet.

Gegenstand der Erfindung sind ferner treibmittelhaltige Emulsionen, die enthalten
mindestens ein Vinylfluoralkan der Formel

CH₂=CH-CₙF₂ₙ₊₁ ,

in der n eine ganze Zahl von 1 bis 6 bedeutet, (di) und
mindestens ein organisches und/oder modifiziertes organisches Polyisocyanat (a) oder mindestens eine Verbindung mit mindestens zwei reaktiven Wasserstoffatomen (b) oder mindestens ein niedermolekulares Kettenverlängerungs- und/oder Vernetzungsmittel (c) oder eine Mischung aus (b) und (c).

Da die erfindungsgemäß verwendbaren Vinylfluoralkane (di) in den erforderlichen Mengen in den Aufbaukomponenten (a), (b) und gegebenenfalls (c) oder in Mischungen aus mindestens zwei dieser Aufbaukomponenten schwer- oder im wesentlichen unlöslich sind, werden diese zweckmäßigerweise in mindestens einer der Aufbaukomponenten, z.B. in (a), (b) oder (c) oder einer Mischung aus (b) und (c) oder (a) und einer Mischung aus (b) und (c) emulgiert und in Form von Emulsionen zur Herstellung der Hartschaumstoffe verwendet.

Im Gegensatz zu hoch- oder perfluorierten, niedrigsiedenden Alkanen reagieren die erfindungsgemäß verwendbaren Vinylfluoralkane der Formel CH₂=CH-CₙF₂ₙ₊₁ sehr leicht mit Hydroxylradikalen und werden daher in der unteren Atmosphäre abgebaut. Vorteilhaft ist ferner, daß die vinylfluoralkane enthaltenden Emulsionen und die hieraus qebildeten Reaktionsmischungen sehr gut fließen. Die Formwerkzeuge, insbesondere solche mit schwierig zu befüllenden Raumformen, können rascher und gleichmäßiger gefüllt werden, so daß Formkörper mit gleichförmiger Zellstruktur und niedrigen Dichten problemlos hergestellt werden können. Die nach dem erfindungsgemäßen Verfahren in offenen oder geschlossenen Formwerkzeugen hergestellten PU oder PU-PIR-Hartschaumstoffe sind feinzellig und weisen eine niedrige Wärmeleitfähigkeit auf.

Zur Herstellung der PU- oder PU-PIR-Hartschaumstoffe nach dem erfindungsgemäßen Verfahren finden, mit Ausnahme der Treibmittel (d), die an sich bekannten Aufbaukomponenten Verwendung, zu denen im einzelnen folgendes auszuführen ist.

a) Als organische Polyisocyanate kommen die üblichen aliphatischen, cycloaliphatischen, araliphatischen und vorzugsweise aromatischen mehrwertigen Isocyanate in Betracht.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie CycloCyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch partielle chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 1500 modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-glykol, Polyoxyethylen-, Polyoxypropylen- und Polyoxypropylen-polyoxyethylen-glykole oder -triole. Geeignet sind auch NCO-Gruppen enthaltende Prepolymere mit NCO-Gehalten von 25 bis 9 Gew.-%, vorzugsweise von 21 bis 14 Gew.-%, bezogen auf das Gesamtgewicht, hergestellt aus den nachfolgend beschriebenen Polyester-und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15 Gew.-%, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.

Besonders bewährt haben sich als organische Polyisocyanate und kommen daher vorzugsweise zur Anwendung zur Herstellung der PU-Hartschaumstoffe: Mischungen aus Toluylen-diisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylen-diisocyanaten, 4,4'-Diphenylmethan-diisocyanat, Diphenylmethan-diisocyanat-Isomerengemischen oder Roh-MDI und insbesondere Roh-MDI mit einem Diphenylmethan-diisocyanat-Isomerengehalt von 30 bis 80 Gew.-%, vorzugsweise von 30 bis 55 Gew.-%.

b) Als Verbindungen (b) mit mindestens zwei reaktiven Wasserstoffatomen kommen vorzugsweise Polyhydroxylverbindungen mit einer Funktionalität von 2 bis 8, vorzugsweise von 3 bis 8, und einer Hydroxylzahl von 150 bis 850, vorzugsweise von 200 bis 600, in Betracht.

Anwendung finden auch Mischungen aus mindestens zwei der genannten Polyhydroxylverbindungen, sofern diese eine durchschnittliche Hydroxylzahl im vorgenannten Bereich aufweisen.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole, sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton, oder Hydroxycarbonsäuren, z.B. ω-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlendioxid, Helium, Argon u.a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 3 und eine Hydroxylzahl von 150 bis 400 und insbesondere von 200 bis 300.

Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und mindestens einem Startermolekül, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a., oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, z.B. zwei- oder insbesondere drei- und/oder höherwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Sucrose.

Die Polyether-polyole besitzen eine Funktionalität von vorzugsweise 3 bis 8 und insbesondere 3 und 6 und Hydroxylzahlen von vorzugsweise 200 bis 850 und insbesondere von 300 bis 600.

Als Polyether-polyole eignen sich ferner Melamin-Polyether-polyol-Dispersionen gemäß EP-A-23 987 (US-A-4 293 657), Polymer-Polyether-polyol-Dispersionen, hergestellt aus Polyepoxiden und Epoxidharzhärtern in Gegenwart von Polyether-polyolen gemäß DE-A-29 43 689 (US-A-4 305 861), Dispersionen von aromatischen Polyestern in Polyhydroxylverbindungen gemäß EP-A-62 204 (US-A-4 435 537) oder DE-A 33 00 474, Dispersionen von organischen und/oder anorganischen Füllstoffen in Polyhydroxylverbindungen gemäß EP-A-11 751 (US-A-4 243 755), Polyharnstoff-Polyether-polyol-Dispersionen gemäß DE-A-31 25 402, Tris-(hydroxyalkyl)isocyanurat-Polyether-polyol-Dispersionen gemäß EP-A-136 571 (US-A-4 514 526) und Kristallitsuspensionen gemäß DE-A-33 42 176 und DE-A-33 42 177 (US-A-4 560 708), wobei die Ausführungen in den genannten Patentveröffentlichungen als Bestandteil der Patentbeschreibung zu betrachten sind.

Die Polyether-polyole können ebenso wie die Polyester-polyole einzeln oder in Form von Mischungen verwendet werden. Ferner können sie mit den obengenannten Dispersionen, Suspensionen oder Polyester-polyolen sowie den hydroxylgruppenhaltigen Polyesteramiden, Polyacetalen und/oder Polycarbonaten gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und Aminoalkoholen oder Mischungen aus mehrwertigen Alkoholen und Aminoalkoholen und/oder Polyaminen gewonnenen, vorwiegend linearen Kondensate.

Als Polyhydroxylverbindungen besonders bewährt haben sich und daher vorzugsweise verwendet werden Mischungen, die, bezogen auf 100 Gew.-Teile, zweckmäßigerweise enthalten:
bi) 0 bis 95 Gew.-Teile, vorzugsweise 20 bis 80 Gew.-Teile, eines mit Sucrose gestarteten Polyether-polyols mit einer Hydroxylzahl von 300 bis 500, vorzugsweise 350 bis 450, auf der Grundlage von 1,2-Propylenoxid oder 1,2-Propylenoxid und Ethylenoxid,
bii) 0 bis 15 Gew.-Teile, vorzugsweise 5 bis 15 Gew.-Teile, eines mit Sorbit gestarteten Polyether-polyols mit einer Hydroxylzahl von 400 bis 600, vorzugsweise von 450 bis 550, auf der Grundlage von 1,2-Propylenoxid oder 1,2-Propylenoxid und Ethylenoxid,
biii) 0 bis 20 Gew.-Teile, vorzugweise 5 bis 15 Gew.-Teile, eines mit Ethylendiamin gestarteten Polyether-polyols mit einer Hydroxylzahl von 700 bis 850, vorzugsweise von 750 bis 800, auf der Grundlage von 1,2-Propylenoxid
   und
biiii) 0 bis 60 Gew.-Teile, vorzugsweise 5 bis 40 Gew.-Teile, eines Polyether-polyols mit einer Hydroxylzahl von 400 bis 600, vorzugsweise von 450 bis 550, auf Basis von 1,2-Propylenoxid oder 1,2-Propylenoxid und Ethylenoxid, hergestellt unter Verwendung einer Mischung aus Sucrose und Triethanolamin im Gewichtsverhältnis von 1:2 bis 2:1 als Startermoleküle.

c) Die PU- oder PU-PIR-Hartschaumstoffe können ohne oder unter Mitverwendung von Kettenverlängerungs- und/oder Vernetzungsmitteln hergestellt werden. Zur Modifizierung der mechanischen Eigenschaften kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Alkanolamine und insbesondere Diole und/oder Triole mit Molekulargewichten kleiner als 400, vorzugsweise von 60 bis 300. In Betracht kommen beispielsweise Alkanolamine, wie z.B. Trialkanolamine wie z.B. Triethanolamin, Triisopropanolamin und die Additionsprodukte aus Ethylenoxid oder 1,2-Propylenoxid und Alkylendiaminen mit 2 bis 6 C-Atomen im Alkylenrest wie z.B. N,N,N',N'-Tetra(2-hydroxyethyl)ethylendiamin und N,N,N',N'-Tetra(2-hydroxypropyl)ethylendiamin, aliphatische, cycloaliphatische und/oder araliphatische Diole mit 2 bis 14, vorzugsweise 4 bis 10, Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und aromatischen Diaminen, wie z.B. Toluylen-diaminen und/oder Diamino-diphenylmethanen sowie den vorgenannten Alkanolaminen, Diolen und/oder Triolen als Startermoleküle.

Sofern zur Herstellung der PU- oder PU-PIR-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyhydroxylverbindung, zum Einsatz.

d) Als Treibmittel zur Herstellung der PU- oder PU-PIR-Hartschaumstoffe finden erfindungsgemäß Vinylfluoralkane der Formel

CH₂=CH-CₙF₂ₙ₊₁ (di)

Verwendung, in der n eine ganze Zahl von 1 bis 6, vorzugsweise 3 bis 5 und insbesondere 3 oder 4 bedeutet. Als geeignete Vinylfluoralkane seien beispielsweise genannt: Vinyl-perfluormethan, Vinyl-perfluorethan, Vinyl-perfluor-n- oder -isopropan, Vinyl-perfluorbutan, Vinylperfluor-sek.-butan, Vinyl-perfluorpentan und Vinyl-perfluorhexan. Die Vinylfluoralkane (di) können einzeln oder als Mischungen verwendet werden.

Geeignet sind auch Mischungen aus den entsprechenden Vinyl-perfluor-n-und -isoalkanen oder ihre technischen Gemische. Als Treibmittel (d) sehr gut bewährt haben sich und daher finden vorzugsweise Vinyl-perfluorisopropan und Vinyl-perfluorbutan Anwendung.

Da die erfindungsgemäß verwendbaren Vinylfluoralkane (di), wie bereits ausgeführt wurde, in den Aufbaukomponenten (a), (b) und (c) oder in Mischungen aus mindestens zwei dieser Aufbaukomponenten in den erforderlichen Mengen schwer- oder im wesentlichen unlöslich sind, werden diese vorzugsweise in einer der Aufbaukomponenten (a), (b) und gegebenenfalls (c) oder in einer Mischung aus mindestens zwei dieser Aufbaukomponenten emulgiert. Die Vinylfluoralkane oder -mischungen werden üblicherweise in einer Menge von 1 bis 40 Gew.-Teilen, vorzugsweise von 1 bis 15 Gew.-Teilen und insbesondere von 2 bis 10 Gew.-Teilen, bezogen auf 100 Gew.-Teile der Aufbaukomponenten (a) und (b) oder (a) bis (c), verwendet.

Die Vinylfluoralkane (di) können als alleinige Treibmittel eingesetzt werden. Die erfindungsgemäß verwendbaren Vinylfluoralkane (di) oder Vinylfluoralkanemulsionen können jedoch auch in Kombination mit anderen, von (di) verschiedenen, physikalisch wirkenden, inerten Treibmitteln, chemisch wirkenden Treibmitteln (dii) oder Mischungen aus von (di) verschiedenen, physikalisch wirkenden und chemisch wirkenden Treibmitteln verwendet werden.

Geeignete Treibmittelmischungen (d) zur Herstellung der Urethan- oder Urethan- und Isocyanuratgruppen enthaltenden Hartschaumstoffe nach dem erfindungsgemäßen Verfahren können somit enthalten oder bestehen vorzugsweise aus
di) mindestens einem Vinylfluoralkan der Formel

   CH₂=CH-CₙF₂ₙ₊₁ ,

   in der n eine ganze Zahl von 1 bis 6, insbesondere 3 oder 4 bedeutet, oder Mischungen davon und
dii) mindestens einem weiteren, von (di) verschiedenen, physikalisch wirkenden Treibmittel oder einem chemisch wirkenden Treibmittel oder einer Mischung aus einem physikalisch und einem chemisch wirkenden Treibmittel.

Als physikalisch wirkende Treibmittel kommen beispielsweise in Betracht:
Alkane mit 4 bis 12 Kohlenstoffatomen, vorzugsweise 5 bis 8 Kohlenstoffatomen,
Cycloalkane mit 4 bis 6 Kohlenstoffatomen, vorzugsweise 5 oder 6 Kohlenstoffatomen,
lineare und cyclische, gesättigte oder olefinisch ungesättigte Ether mit 2 bis 5 Kohlenstoffatomen,
aliphatische Carbonsäureester mit einem Siedepunkt von maximal 142°C, vorzugsweise von unter 80°C,
aliphatische und/oder cycloaliphatische Ketone mit 3 bis 5 Kohlenstoffatomen,
teilhalogenierte Fluorchlorkohlenwasserstoffe mit 1 oder 2 Kohlenstoffatomen,
partiell fluorierte oder vorzugsweise perfluorierte tertiäre Alkylamine mit 3 bis 9 Kohlenstoffatomen, vorzugsweise 4 bis 6 Kohlenstoffatomen,
partiell fluorierte oder perfluorierte, lineare oder cyclische Ether mit 2 bis 12 Kohlenstoffatomen, vorzugsweise 3 bis 6 Kohlenstoffatomen und
vorzugsweise fluorierte oder perfluorierte, vorteilhafterweise aliphatische oder cycloaliphatische, Kohlenwasserstoffe mit 3 bis 8 Kohlenstoffatomen, wobei insbesondere verwendet werden bei Raumtemperatur flüssige, aliphatische oder cycloaliphatische fluorierte Kohlenwasserstoffe mit 4 bis 6 Kohlenstoffatomen, die mindestens ein Wasserstoffatom gebunden enthalten, und aliphatische oder cycloaliphatische, perfluorierte Kohlenwasserstoffe mit 4 bis 7 Kohlenstoffatomen.

Als physikalisch wirkende Treibmittel (dii) der genannten Art seien beispielhaft genannt: Gasförmige oder vorzugsweise flüssige, lineare oder verzweigte Alkane, wie z.B. Butan, n-, iso-Pentan sowie die technischen Pentangemische, n- und iso-Hexane, n- und iso-Heptane, n- und iso-Octane, n- und iso-Nonane, n- und iso-Decane, n- und iso-Undecane und n- und iso-Dodecane. Da sehr gute Ergebnisse hinsichtlich der Stabilität der Emulsionen, der Verarbeitbarkeit der Reaktionsmischung und den mechanischen Eigenschaften der hergestellten Urethan- oder Urethan- und Isocyanuratgruppen enthaltenden Hartschaumstoffe erzielt werden bei Verwendung von n-Pentan, iso-Pentan, n-Hexan, iso-Hexan oder Mischungen davon, werden diese Alkane bevorzugt eingesetzt. Beispielhaft genannt seien ferner als Cycloalkane z.B. Cyclobutan, vorzugsweise Cyclopentan, Cyclohexan oder Mischungen davon, als lineare oder cyclische Ether, z.B. Dimethylether, Diethylether, Methylethylether, Vinylmethylether, Vinylethylether, Divinylether, Tetrahydrofuran und Furan, als aliphatische Carbonsäureester z.B. Methyl-, Ethyl-, n-Propyl-, iso-Propyl- und Butylacetat und vorzugsweise Methyl- und Ethylformiat, als Ketone z.B. Aceton, Methylethylketon und Cyclopentanon, als teilhalogenierte Fluorchlorkohlenwasserstoffe z.B. Difluor-monochlormethan (R 22), 1,1,1-Trifluor-2,2-dichlorethan (R 123) und 1,1,1-Dichlormonofluorethan (R 141b), als fluorierte oder perfluorierte, tertiäre Alkylamine z.B. Perfluordimethyl-ethylamin, Perfluor-diethyl-methylamin, Perfluor-trimethylamin, Perfluor-triethylamin, Perfluor-dimethyl-n-propylamin, Perfluordiethyl-n-propylamin und vorzugsweise Perfluor-dimethyl-isopropylamin sowie die entsprechenden partiell fluorierten tertiären Alkylamine, als partiell fluorierte oder perfluorierte, lineare oder cyclische Ether z.B. 2,2,2-Trifluorethylmethylether (CF₃CH₂OCH₃), 2,2,2-Trifluorethyldifluormethylether (CF₃CH₂OCHF₂), Perfluordiethyl-, Perfluordipropyl- und Perfluorethylpropylether, Oligomere des Perfluorpropylenoxids mit einem Siedepunkt von maximal 140°C, Perfluortetrahydrofuran, Perfluoralkyltetrahydrofurane und Perfluorfuran. Gut geeignet sind auch bei Raumtemperatur gasförmige, aliphatische oder cycloaliphatische, fluorierte oder perfluorierte Kohlenwasserstoffe, wie z.B. Perfluorpropan, Perfluorbutan oder Perfluorcyclobutan, die unter Druck, z.B. bei einem Druck von bis zu ungefähr 25 bar, verflüssigt, gemischt und emulgiert werden können.

Als physikalisch wirkende Treibmittel (dii) vorzüglich bewährt haben sich jedoch und daher vorzugsweise verwendet werden bei Raumtemperatur flüssige, aliphatische oder cycloaliphatische, fluorierte oder perfluorierte Kohlenwasserstoffe. Als fluorierte Kohlenwasserstoffe werden zweckmäßigerweise solche verwendet, die überwiegend, beispielsweise zu mindestens 85 % fluoriert sind und mindestens ein, vorzugsweise ein Wasserstoffatom gebunden haben. Geeignete fluorierte Kohlenwasserstoffe sind beispielsweise Trifluormethan, Difluormethan, Difluorethan, Tetrafluorethan und vorzugsweise Hexafluorpropan, Heptafluorpropan, 1-H-Perfluorbutan und 1-H-Perfluorhexan. Als perfluorierte Kohlenwasserstoffe kommen beispielsweise in Betracht: Perfluorpentan, Perfluorhexan, Perfluorheptan, Perfluoroctan, Perfluorcyclopentan und Perfluorcyclohexan. Die fluorierten oder perfluorierten Kohlenwasserstoffe oder Mischungen davon können ebenso wie die anderen geeigneten physikalisch wirkenden Treibmittel einzeln oder in Form von Gemischen verwendet werden. Verwendbar sind ferner Mischungen aus den unterschiedlichen physikalisch wirkenden Treibmitteln.

Als Treibmittelmischungen dieser Art seien beispielhaft solche genannt, die enthalten
di) mindestens ein Vinylfluoralkan aus der Gruppe Vinyl-perfluorisopropan und vorzugsweise Vinyl-perfluor-n-butan, und
dii) mindestens einen partiell fluorierten Kohlenwasserstoff aus der Gruppe Hexafluorpropan, Heptafluorpropan, 1-H-Perfluorbutan und 1-H-Perfluorhexan oder/und mindestens einen partiell fluorierten Ether aus der Gruppe 2,2,2-Trifluorethylmethylether und 2,2, 2-Trifluorethyl-difluormethylether.

Die erfindungsgemäß verwendbaren Treibmittelmischungen (d) enthalten die Vinylfluoralkane (di) und die weiteren physikalisch wirkenden Treibmittel (dii), vorzugsweise die fluorierten und/oder perfluorierten Kohlenwasserstoffe, vorteilhafterweise in einem Gewichtsverhältnis von 90:10 bis 10:90, vorzugsweise von 80:20 bis 60:40. Sofern die anderen physikalisch wirkenden Treibmittel (dii) in den erforderlichen Mengen in den Aufbaukomponenten (a), (b) oder (c) unlöslich sind, werden sie zweckmäßigerweise gemeinsam mit den Vinylfluoralkanen (di) in mindestens einer dieser Aufbaukomponenten emulgiert.

Zusätzlich zu den erfindungsgemäß als Treibmittel verwendbaren Vinylfluoralkanen (di) oder Mischungen aus (di) und einem anderen, von (di) verschiedenen, physikalisch wirkenden Treibmittel (dii), oder anstelle der anderen, von (di) verschiedenen, physikalisch wirkenden Treibmittel, können auch chemisch wirkende Treibmittel Verwendung finden. Als chemisch wirkendes Treibmittel hat sich insbesondere Wasser bewährt, das mit den organischen, gegebenenfalls modifizierten Polyisocyanaten (a) unter Bildung von Kohlendioxid, dem eigentlichen Treibmittel, und Harnstoffgruppen reagiert und dadurch die Druckfestigkeit der Endprodukte beeinflußt. Als chemisch wirkende Treibmittel kommen ferner organische Mono- und Polycarbonsäuren mit einem Molekulargewicht von 60 bis 300 und vorzugsweise Ameisensäure sowie Ammonium- und/oder Aminsalze der Ameisensäure und/oder der oben genannten Mono- und/oder Polycarbonsäuren in Betracht, sofern diese unter den Reaktionsbedingungen mit Isocyanaten reagieren und Kohlendioxid bilden.

Als organische Carbonsäuren finden vorteilhafterweise aliphatische Mono- und Polycarbonsäuren, z.B. Dicarbonsäuren, Verwendung. Geeignet sind jedoch andere organische Mono- und Polycarbonsäuren. Die organischen Carbonsäuren können gegebenenfalls auch unter den Reaktionsbedingungen der Polyisocyanat-Polyaddition inerte oder mit Isocyanaten reaktionsfähige Substituenten gebunden enthalten und/oder olefinisch ungesättige Gruppen aufweisen. Als chemisch inerte Substituenten seien beispielsweise Halogenatome, wie z.B. Fluor- und/oder Chloratome, und Alkylreste, wie z.B. Methyl- oder Ethylreste, genannt. Zweckmäßigerweise besitzen die substituierten organischen Carbonsäuren mindestens eine weitere gegenüber Isocyanaten reaktionsfähige Gruppe, wie z.B. eine Mercaptogruppe, primäre und/oder sekundäre Aminogruppen und vorzugsweise primäre und/oder sekundäre Hydroxylgruppen.

In Betracht kommen somit gegebenenfalls substituierte Monocarbonsäuren wie z.B. Essigsäure, Propionsäure, 2-Chlorpropionsäure, 3-Chlorpropionsäure, 2,2-Dichlorpropionsäure, Hexansäure, 2-Ethylhexansäure, Cyclohexancarbonsäure, Dodecansäure, Palmitinsäure, Stearinsäure, Ölsäure, 3-Mercaptopropionsäure, Glycolsäure, 3-Hydroxypropionsäure, Milchsäure, Ricinolsäure, 2-Aminopropionsäure, Benzoesäure, 4-Methylbenzoesäure, Salicylsäure und Antranilsäure und gegebenenfalls substituierte Polycarbonsäuren, vorzugsweise Dicarbonsäuren wie z.B. Oxalsäure, Malonsäure, Bernsteinsäure, Fumarsäure, Maleinsäure, Glutarsäure, Adipinsäure, Sebacinsäure, Dodecandisäure, Weinsäure, Phthalsäure, Isophthalsäure und Zitronensäure.

Zur Bildung der Aminsalze werden üblicherweise schwach basische Amine wie z.B. Triethylamin, Dimethylbenzylamin oder Hydrazin verwendet.

Da die in den Polyester- und Polyether-polyolen als Nebenprodukt enthaltene Wassermenge vielfach ausreicht, bedarf es oft keiner zusätzlichen Zugabe eines chemisch wirkenden Treibmittels. Vorzugsweise wird jedoch der Polyurethan-Formulierung zusätzlich Wasser einverleibt, üblicherweise in einer Menge von 0,05 bis 5 Gew.-%, vorzugsweise von 0,5 bis 4 Gew.-%, bezogen auf das Gewicht der Aufbaukomponenten (a) bis (c).

Geeignete Treibmittelmischungen (d) enthalten somit, bezogen auf das Gesamtgewicht von (di) und (dii), zweckmäßigerweise
di) mindestens 30 Gew.-%, vorzugsweise mindestens 50 Gew.-%, mindestens eines Vinylfluoralkans (di) und
dii) maximal 70 Gew.-%, vorzugsweise weniger als 50 Gew.-%, mindestens eines weiteren, von (di) verschiedenen, physikalisch wirkenden und/oder chemisch wirkenden Treibmittels (dii).

Beispielhaft genannt seien Treibmittelmischungen, die enthalten
di) mindestens ein Vinylfluoralkan aus der Gruppe Vinyl-perfluorisopropan und vorzugsweise Vinyl-perfluor-n-butan, und
dii) Wasser sowie gegebenenfalls mindestens einen partiell fluorierten Kohlenwasserstoff aus der Gruppe Hexafluorpropan, Heptafluorpropan, 1-H-Perfluorbutan und 1-H-Perfluorhexan oder/und mindestens einen partiell fluorierten Ether aus der Gruppe 2,2,2-Trifluorethylmethylether und 2,2,2-Trifluorethyl-difluormethylether.

Die zweckmäßigste Menge an Vinylfluoralkanen (di) als Treibmittel zur Herstellung der Urethan- oder Urethan- und Isocyanuratgruppen enthaltenden Hartschaumstoffe hängt ab von der Dichte, die man erreichen will, und der gegebenenfalls eingesetzten Menge an Wasser, als dem bevorzugt verwandten chemisch wirkenden Treibmittel. Die erforderlichen Treibmittelmengen können experimentell auf einfache Weise ermittelt werden. Im allgemeinen liefern Mengen von 1 bis 40 Gew.-Teilen, vorzugsweise von 1 bis 15 Gew.-Teilen und insbesondere 3 bis 10 Gew.-Teilen der Vinylfluoralkane (di) oder vorzugsweise der Treibmittelmischungen, bestehend aus (di) und (dii), bezogen auf 100 Gew.-Teile der Aufbaukomponenten (a) bis (c) oder (a) und (b), zufriedenstellende Ergebnisse.

Die erfindungsgemäß als Treibmittel (d) verwendbaren Vinylfluoralkane (di) der Formel CH₂=CH-CₙF₂ₙ₊₁ oder Treibmittelmischungen aus Vinylfluoralkanen (di) und einem weiteren, von (di) verschiedenen, physikalisch und/oder chemisch wirkenden Treibmittel (dii) werden zur Verarbeitung vorzugsweise in den Aufbaukomponenten (a), (b), (c) oder in Mischungen aus (b) und (c) oder in (a) und (b) emulgiert, wobei sich die löslichen, physikalisch oder chemisch wirkenden Treibmittel (dii) der Treibmittelmischung (d) in den Aufbaukomponenten homogen lösen.

Zur Erzielung derartiger treibmittelhaltiger Emulsionen eignen sich die aus der Polyurethanchemie bekannten Emulgatoren. Als Emulgatoren insbesondere eingesetzt werden oligomere Acrylate, die als Seitengruppen Polyoxyalkylen- und Fluoralkanreste gebunden enthalten und einen Fluorgehalt von ungefähr 5 bis 30 Gew.-% aufweisen. Oligomere Acrylate dieser Art sind aus der Kunststoffchemie, z.B. als Haftvermittler in verstärkten Kunststoffen, hinreichend bekannt, so daß sich nähere Ausführungen erübrigen. Ihre Struktur und Verfahren zu ihrer Herstellung, sowie geeignete fluoraliphatische Reste und aktiven Wasserstoff enthaltende Vorläufer, die zur Herstellung der beschriebenen Oligomeren verwendet werden können, werden z.B. ausführlich beschrieben in der DE-B-23 10 357 und der hierzu äquivalenten US-Patentschrift Nr. 3 787 351 sowie den dort genannten Literatur- und Patentpublikationen und der DE-A-38 24 355. Die Ausführungen dieser Publikationen, insbesondere der US 3 787 351, werden in vollem Umfange in die Anmeldebeschreibung incorporiert und als Bestandteil der Anmeldebeschreibung angesehen.

Die z.B. als Emulgator geeigneten oligomeren Acrylate mit Polyoxyalkylen- und Fluoralkanresten als Seitengruppen werden zweckmäßigerweise in einer Menge von 0,01 bis 6 Gew.-Teilen, vorzugsweise 0,2 bis 3,5 Gew.-Teilen und insbesondere 0,5 bis 2,0 Gew.-Teilen, bezogen auf 100 Gew.-Teile der Aufbaukomponenten (a), (b), (c) oder der Mischung aus (b) und (c), eingesetzt.

Zur Emulgierung der Vinylfluoralkane (di) oder der Treibmittelmischung aus (di) und (dii) eignen sich, wie bereits ausgeführt wurde, die organischen und/oder modifizierten organischen Polyisocyanate (a), die Verbindungen mit mindestens zwei reaktiven Wasserstoffatomen (b) und die niedermolekularen Kettenverlängerungs- und/oder Vernetzungsmittel (c). Geeignet sind ferner Mischungen aus (b) und niedermolekularen Kettenverlängerungs- und/oder Vernetzungsmitteln (c).

Bei Verwendung von organischen und/oder modifizierten organischen Polyisocyanaten (a) als andere Emulsionsphase finden vorzugsweise aromatische Polyisocyanate, ausgewählt aus der Gruppe 2,4-, 2,6-Toluylen-diisocyanat oder Mischungen der genannten Isomeren, 4,4'-, 2,4'- und 2,2'-Diphenylmethan-diisocyanat oder Mischungen aus mindestens zwei der genannten Isomeren und Mischungen aus Diphenylmethan-diisocyanaten und Polyphenyl-polymethylen-polyisocyanaten, Anwendung. Sofern die organischen Polyisocyanate bei Raumtemperatur kristallin sind, werden sie durch Mischen mit flüssigen Polyisocyanaten und/oder durch geeignete partielle Modifizierung, wie z.B. Carbodiimidisierung und/oder Urethanisierung, verflüssigt.

Als andere Emulsionsphase finden jedoch vorzugsweise die Verbindungen mit mindestens zwei reaktiven Wasserstoffatomen (b) Verwendung. Insbesondere geeignet sind Polyester-polyole oder deren Gemische mit einer Funktionalität von 2 bis 3 und einem Molekulargewicht von 480 bis 3000 und Polyether-polyole oder deren Gemische mit einer Funktionalität von 2 bis 6 und einem Molekulargewicht von 400 bis 8000, wobei diese zweckmäßigerweise ausgewählt sind aus der Gruppe der Polyoxyethylen-, Polyoxypropylen-, Polyoxypropylen-polyoxyethylen-polyole und Polyoxytetramethylen-glykole oder Mischungen davon.

Die erfindungsgemäßen treibmittelhaltigen Emulsionen enthalten somit oder bestehen vorzugsweise aus
mindestens einem Vinylfluoralkan der Formel CH₂=CH-CₙF₂ₙ₊₁, in der n eine ganze Zahl von 1 bis 6 bedeutet, (di) und
mindestens einem organischen und/oder modifizierten organischen Polyisocyanat (a) oder mindestens einer höhermolekularen Verbindung mit mindestens zwei reaktiven Wasserstoffatomen (b) oder mindestens einem niedermolekularen Kettenverlängerungs- und/oder Vernetzungsmittel (c) oder einer Mischung aus (b) und (c).

Als treibmittelhaltige Emulsionen insbesondere bewährt haben sich solche, die bestehen aus
1 bis 40 Gew.-Teilen, vorzugsweise 2 bis 15 Gew.-Teilen, bezogen auf 100 Gew.-Teile von (b) oder (b) und (c), eines oder mehrerer Vinylfluoralkane der Formel CH₂=CH-CₙF₂ₙ₊₁, in der n eine ganze Zahl von 1 bis 6 bedeutet, (di),
0 bis 5 Gew.-Teilen, vorzugsweise 1,5 bis 3,5 Gew.-Teilen, bezogen auf 100 Gew.-Teile von (b) oder (b) und (c), Wasser (dii),
0 bis 36 Gew.-Teilen, vorzugsweise 1 bis 7 Gew.-Teilen, bezogen auf 100 Gew.-Teile von (b) oder (b) und (c), mindestens eines weiteren, von (di) verschiedenen, in den Aufbaukomponenten (a), (b) oder (c) schwer- oder unlöslichen, physikalisch wirkenden Treibmittels (dii), vorzugsweise einer fluorierten oder perfluorierten organischen Verbindung (dii), die keine olefinisch ungesättigten Gruppen im Molekül gebunden enthält, und
mindestens einer höhermolekularen Verbindung mit mindestens zwei reaktiven Wasserstoffatomen (b) oder Mischungen aus (b) und niedermolekularen Kettenverlängerungs- und/oder Vernetzungsmitteln (c).
Insbesondere bevorzugt sind Emulsionen der genannten Art, bei denen die Vinylfluoralkane (di) Vinyl-perfluorisopropan und/oder Vinyl-perfluor-n-butan sind.

Zur Herstellung der treibmittelhaltigen Emulsionen werden die Aufbaukomponenten (a), (b) oder (c) bzw. Mischungen aus (b) und (c) und die Vinylfluoralkane oder Vinylfluoralkane enthaltenden Treibmittelmischungen (d) zweckmäßigerweise in Gegenwart eines Emulgators, vorzugsweise eines oligomeren Acrylats, bei Temperaturen von 0 bis 70°C, vorzugsweise von 20 bis 40°C intensiv vermischt. Als geeignete Mischaggregate hierfür seien beispielhaft genannt: statische Mischer, wie z.B. SMX der Firma Sulzer (Schweiz), oder dynamische Mischer, wie z.B. Propellerrührer oder Ultra-Turrax® der Firma Hanke und Kunkel (BRD).

e) Als Katalysatoren (e) zur Herstellung der PU- oder PU-PIR-Hartschaumstoffe werden insbesondere Verbindungen verwendet, die die Reaktion der Hydroxylgruppen enthaltenden Verbindungen der Aufbaukomponente (b) und gegebenenfalls (c) mit den organischen, gegebenenfalls modifizierten Polyisocyanaten (a) stark beschleunigen. In Betracht kommen beispielsweise organische Metallverbindungen, vorzugsweise organische Zinnverbindungen, wie z.B. Zinn-(II)-salze von organischen Carbonsäuren, z.B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat, organische Amidine, wie z.B. 2,3-Dimethyl-3,4,5,6-tetrahydropyrimidin, tertiäre Amine, wie z.B. Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b). Die organischen Metallverbindungen und stark basischen Amine, vorzugsweise tertiären Amine, können jeweils als alleinige Katalysatoren oder in Kombination miteinander eingesetzt werden.

f) Der Reaktionsmischung zur Herstellung der PU- oder PU-PIR-Hartschaumstoffe können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.

Geeignete Flammschutzmittel sind beispielsweise Diphenylkresylphosphat, Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Blähgraphit und Cyanursäurederivate, wie z.B. Melamin oder Mischungen aus mindestens zwei Flammschutzmitteln, wie z.B. Ammoniumpolyphosphaten, Blähgraphit und Melamin sowie gegebenenfalls Stärke zum Flammfestmachen der erfindungsgemäß hergestellten PU- oder PU-PIR-Hartschaumstoffe verwendet werden. Im allgemeinen hat es sich als zweckmäßig erwiesen, 5 bis 50 Gew.-Teile, vorzugsweise 5 bis 25 Gew.-Teile, der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Hartschaumstoffe werden die organischen, gegebenenfalls modifizierten Polyisocyanate (a), die Verbindungen mit mindestens zwei reaktiven Wasserstoffatomen (b) und gegebenenfalls Kettenverlängerungsmittel und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) in dem Bereich von 0,85 bis 1,25:1, vorzugsweise von 0,95 bis 1,15:1 und insbesondere 1 bis 1,05:1 liegt. Sofern die Urethangruppen enthaltenden Hartschaumstoffe durch die Bildung von Isocyanuratgruppen modifiziert werden, beispielsweise zur Erhöhung der Flammwidrigkeit, wird üblicherweise ein NCO:OH-Äquivalenzverhältnis von bis zu 60:1, vorzugsweise von 1,5 bis 30:1 und insbesondere von 1,5 bis 8:1 angewandt.

Die PU- oder PU-PIR-Hartschaumstoffe können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponenten-Verfahren zu arbeiten und die Aufbaukomponente (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten zu verwenden.

Die Ausgangskomponenten werden bei einer Temperatur von 15 bis 90°C, vorzugsweise von 20 bis 65°C und insbesondere von 20 bis 35°C gemischt und in ein offenes, gegebenenfalls temperiertes Formwerkzeug eingebracht, in der man die Reaktionsmischung zur Vermeidung einer verdichteten Randzone im wesentlichen druckfrei aufschäumen läßt. Zur Herstellung von PU- oder PU-PIR-Formschaumstoffen wird das teilweise gefüllte Formwerkzeug geschlossen und die Reaktionsmischung üblicherweise unter Verdichtung, z.B. mit einem Verdichtungsgrad von 1,2 bis 8, vorzugsweise von 1,5 bis 4, aufschäumen und aushärten gelassen. Zur Bildung von Verbundelementen beschichtet man zweckmäßigerweise die Rückseite einer Deckschicht, z.B. durch Begießen oder Besprühen, mit der schaumfähigen Reaktionsmischung und läßt diese aufschäumen und zum PU- oder PU-PIR-Hartschaumstoff aushärten.

Die nach dem erfindungsgemäßen Verfahren hergestellten PU- oder PU-PIR-Hartschaumstoffe besitzen vorteilhafterweise Dichten von 15 bis 100 g/l und vorzugsweise von 28 bis 60 g/l.

Die PU- oder PU-PIR-Hartschaumstoffe finden vorzugsweise Verwendung als wärmedämmende Zwischenschicht in Verbundelementen und zum Ausschäumen von Hohlräumen in Kühlmöbelgehäusen, insbesondere für Kühlschränke und Gefriertruhen, und als Außenmantel von Heißwasserspeichern. Die Produkte eignen sich ferner zur Isolierung von erwärmten Materialien, als Motorabdeckung und als Rohrschalen.

Die in den Beispielen genannten Teile sind Gew.-Teile.

### Beispiel 1

### A-Komponente:

Zur Herstellung der treibmittelhaltigen Emulsion fügte man zu einer Mischung, die bestand aus
- 82 Gew.-Teilen: eines Polyoxypropylen-polyols mit einer Hydroxylzahl von 400, hergestellt aus Sucrose als Startermolekül und 1,2-Propylenoxid,
- 10 Gew.-Teilen: eines Polyoxypropylen-glykols mit der Hydroxylzahl von 105, hergestellt unter Verwendung von 1,2-Propandiol als Startermolekül,
- 2 Gew.-Teilen: Polysiloxan-Schaumstabilisator (Tegostab® B8406 der Firma Goldschmidt AG, Essen),
- 2 Gew.-Teilen: N,N-Dimethylcyclohexylamin und
- 4 Gew.-Teilen: Wasser,
unter intensivem Rühren mit einem Ultra Turrax® bei 23°C
- 9 Gew.-Teile: Vinyl-perfluor-n-butan.

Man erhielt eine milchige Emulsion des Vinyl-perfluor-n-butans in der Polyether-polyolmischung.

### B-Komponente:

Mischung aus Diphenylmethan-diisocyanaten und Polyphenyl-polymethylen-polyisocyanaten mit einem NCO-Gehalt von 31 Gew.-% (Lupranat® M20S der BASF Aktiengesellschaft)
- 100 Gew.-Teile: der A-Komponente und
- 150 Gew.-Teile: der 8-Komponente
wurden bei 23°C unter intensivem Rühren vermischt, die schaumfähige Reaktionsmischung wurde in ein offenes quaderförmiges, metallisches Formwerkzeug eingefüllt und dort frei aufschäumen gelassen.

Man erhielt einen sehr feinzelligen PU-Hartschaumstoff mit einem mittleren Porendurchmesser von 220 µm und einer Dichte von 27 g/l. Der Anteil an geschlossenen Zellen betrug 93 % und die Wärmeleitfähigkeit 19 mW/m K.

### Beispiel 2

Man verfuhr analog den Angaben des Beispiels 1, füllte jedoch die schaumfähige Reaktionsmischung in ein offenes, quaderförmiges metallisches Formwerkzeug mit einem Formvolumen von 8,5 1 ein, das danach geschlossen wurde.

Zum vollständigen Ausschäumen des Formwerkzeugs wurden 256 g der Reaktionsmischung benötigt. Man erhielt einen Formkörper mit der minimalen Dichte von 30 g/l.

### Vergleichsbeispiel 1

Man verfuhr analog den Angaben des Beispiels 1, verwendete jedoch anstelle des Vinyl-perfluor-n-butans 9 Gew.-Teile Perfluor-n-pentan als Treibmittel.

Die Reaktionsmischung wurde analog den Angaben des Beispiels 2 verschäumt. Zum vollständigen Ausschäumen des quaderförmigen Formwerkzeughohlraums von 8,5 l benötigte man 340 g der Reaktionsmischung.

Man erhielt ebenfalls einen sehr feinzelligen Polyurethanhartschaumstoff, dessen minimale Formkörperdichte jedoch 40 g/l betrug.

### Beispiel 3

Man verfuhr analog den Angaben des Beispiels 1, verwendete jedoch anstelle von 4,0 Gew.-Teilen, lediglich 0,5 Gew.-Teile Wasser und 10 Gew.-Teile Vinyl-perfluor-iso-propan.
Das Mischungsverhältnis von A- zu B-Komponente betrug 100:109.

Man erhielt einen sehr feinzelligen PU-Hartschaumstoff mit einem mittleren Porendurchmesser von 180 µm und einer Dichte von 86 g/l. Der Anteil an geschlossenen Zellen betrug 95 % und die Wärmeleitfähigkeit 19,5 mW/m°K.

### Beispiel 4

### A-Komponente:

Zur Herstellung der treibmittelhaltigen Emulsion fügte man zu einer Mischung, die bestand aus
- 82 Gew.-Teilen: eines Polyoxypropylen-polyols mit einer Hydroxylzahl von 400, hergestellt aus Sucrose als Startermolekül und 1,2-Propylenoxid,
- 10 Gew.-Teilen: eines Polyoxypropylen-glykols mit der Hydroxylzahl von 105, hergestellt unter Verwendung von 1,2-Propandiol als Startermolekül,
- 2,5 Gew.-Teilen: eines Polysiloxan-Schaumstabilisators (SR 321 der PB-Company),
- 2,0 Gew.-Teilen: N,N-Dimethylcyclohexylamin und
- 3,6 Gew.-Teilen: Wasser
unter intensivem Rühren bei 23°C
- 3,8 Gew.-Teile: Vinyl-perfluor-n-butan und
- 5,2 Gew.-Teile: Perfluorhexan.

Die erhaltene Emulsion (A-Komponente) wurde mit der in Beispiel 1 beschriebenen B-Komponente im Gewichtsverhältnis 100:157 unter intensivem Rühren vermischt und die Reaktionsmischung analog den Angaben des Beispiels 1 aufschäumen gelassen.

Man erhielt einen feinzelligen PU-Hartschaumstoff mit einem mittleren Porendurchmesser von 273 µm und einer Dichte von 32 g/l. Der Anteil an geschlossenen Zellen betrug 95 % und die Wärmeleitfähigkeit 18,6 mW/m°K.

### Beispiel 5

Man verfuhr analog den Angaben des Beispiels 4, verwendete jedoch eine Treibmittelmischung, die bestand aus
- 4,15 Gew.-Teilen: Vinyl-perfluor-n-butan und
- 4,85 Gew.-Teilen: Perfluorpentan.

Das Mischungsverhältnis von A- zu B-Komponente betrug 100:157.

Man erhielt einen feinzelligen PU-Hartschaumstoff mit einem mittleren Porendurchmesser von 241 µm und einer Dichte von 32 g/l. Der Anteil an geschlossenen Zellen betrug 94 % und die Wärmeleitfähigkeit 18,3 mW/m°K.

### Beispiel 6

Man verfuhr analog den Angaben des Beispiels 4, verwendete jedoch eine Treibmittelmischung, die bestand aus
- 3,9 Gew.-Teilen: Vinyl-perfluor-n-butan und
- 5,1 Gew.-Teilen: 1H-Perfluorhexan.

Das Mischungsverhältnis von A- zu B-Komponente betrug 100:157.

Man erhielt einen feinzelligen PU-Hartschaumstoff mit einem mittleren Porendurchmesser von 420 µm und einer Dichte von 31 g/l. Der Anteil an geschlossenen Zellen betrug 93 % und die Wärmeleitfähigkeit 21 mW/m°K.

### Beispiel 7

### A-Komponente:

Zur Herstellung der treibmittelhaltigen Emulsion fügte man zu einer Mischung, die bestand aus
- 91,3 Gew.-Teilen: eines Polyoxypropylen-polyols mit einer OH-Zahl von 400, hergestellt aus Sucrose als Startermolekül und 1,2-Propylenoxid,
- 2,5 Gew.-Teilen: Schaumstabilisator (VPAC 3408 der Firma Bayer AG),
- 2,0 Gew.-Teilen: N,N-Dimethylcyclohexylamin und
- 4,2 Gew.-Teilen: Wasser
unter intensivem Rühren bei 23°C
- 9,0 Gew.-Teile: Vinyl-perfluor-n-hexan.

Die erhaltene Emulsion (A-Komponente) wurde mit der in Beispiel 1 beschriebenen B-Komponente im Gewichtsverhältnis 100:153 unter intensivem Rühren vermischt und die Reaktionsmischung analog den Angaben des Beispiels 1 aufschäumen gelassen.

Man erhielt einen feinzelligen PU-Hartschaumstoff der Dichte 29 g/l mit 93 % geschlossenen Zellen. Die Wärmeleitfähigkeit betrug 20,5 mW/m°K.

### Beispiel 8

Man verfuhr analog den Angaben des Beispiels 4, verwendete jedoch eine Treibmittelmischung, die bestand aus
- 8,4 Gew.-Teilen: Vinyl-perfluor-n-butan und
- 4,6 Gew.-Teilen: 2,2,2-Trifluorethyl-difluormethylether.

Die erhaltene Emulsion (A-Komponente) wurde mit der in Beispiel 1 beschriebenen B-Komponente im Gewichtsverhältnis 100:157 unter intensivem Rühren vermischt und die Reaktionsmischung analog den Angaben des Beispiels 1 aufschäumen gelassen.

Man erhielt einen feinzelligen PU-Hartschaumstoff der Dichte 28,8 g/l. Der Anteil an geschlossenen Zellen betrug 88 % und die Wärmeleitfähigkeit 19,5 mW/mK.

### Beispiel 9

### A-Komponente:

Zur Herstellung der treibmittelhaltigen Emulsion fügte man zu 100 Gew.-Teilen einer Mischung, die bestand aus
- 91,9 Gew.-Teilen: eines Polyoxypropylen-polyols mit einer OH-Zahl von 400, hergestellt aus Sucrose als Startermolekül und 1,2-Propylenoxid,
- 2,0 Gew.-Teilen: N,N-Dimethylcyclohexylamin,
- 3,6 Gew.-Teilen: Wasser und
- 2,5 Gew.-Teilen: eines Schaumstabilisators (VP AC 3408 der Bayer AG)
unter intensivem Rühren bei 23°C
- 8,6 Gew.-Teile: Vinyl-perfluor-n-hexan und
- 1,8 Gew.-Teile: n-Pentan

Die erhaltene Emulsion (A-Komponente) wurde mit der in Beispiel 1 beschriebenen B-Komponente im Gewichtsverhältnis 100:142 unter intensivem Rühren vermischt und die Reaktionsmischung analog den Angaben des Beispiels 1 aufschäumen gelassen.

Man erhielt einen feinzelligen PU-Hartschaumstoff der Dichte 31,6 g/l. Der Anteil an geschlossenen Zellen betrug 91 % und die Wärmeleitfähigkeit 20,0 mW/mK.

### Beispiel 10

Man verfuhr analog den Angaben des Beispiels 9, verwendete jedoch eine Treibmittelmischung, die bestand aus
- 4,5 Gew.-Teilen: Vinyl-perfluor-n-butan und
- 4,5 Gew.-Teilen: oligomerem Perfluor-propylenoxid (Galden^{@} HT 70 der Firma Montedison).

Die erhaltene Emulsion (A-Komponente) wurde mit der in Beispiel 1 beschriebenen B-Komponente im Gewichtsverhältnis 100:144 unter intensivem Rühren vermischt und die Reaktionsmischung analog den Angaben des Beispiels 1 aufschäumen gelassen.

Man erhielt einen feinzelligen PU-Hartschaumstoff der Dichte 34,2 g/l. Der Anteil an geschlossenen Zellen betrug 92 % und die Wärmeleitfähigkeit 19,3 mW/mK.

### Beispiel 11

Man verfuhr analog den Angaben des Beispiels 9, verwendete jedoch eine Treibmittelmischung, die bestand aus
- 4,0 Gew.-Teilen: Vinyl-perfluor-n-butan und
- 2,5 Gew.-Teilen: 1,1,1-Trifluor-2,2-dichlor-ethan.

Die erhaltene Emulsion (A-Komponente) wurde mit der in Beispiel 1 beschriebenen B-Komponente im Gewichtsverhältnis 100:148 unter intensivem Rühren vermischt und die Reaktionsmischung analog den Angaben des Beispiels 1 aufschäumen gelassen.

Man erhielt einen feinzelligen PU-Hartschaumstoff der Dichte 29,5 g/l. Der Anteil an geschlossenen Zellen betrug 90 % und die Wärmeleitfähigkeit 19,8 mW/mK.

## Patentansprüche

1. Verfahren zur Herstellung von Urethangruppen oder Urethan- und Isocyanuratgruppen enthaltenden Hartschaumstoffen durch Umsetzung von
a) organischen und/oder modifizierten organischen Polyisocyanaten mit
b) mindestens einer Verbindung mit mindestens zwei reaktiven Wasserstoffatomen, ausgewählt aus Polyetherpolyolen, Polyesterpolyolen, Polycarbonaten, Polyesteramiden oder Polyacetalen mit einer Funktionalität von 2 bis 8 und einer Hydroxylzahl von 150 bis 850, Polyesterpolyolen mit einer Funktionalität von 2 bis 3 und einem Molekulargewicht von 480 bis 3000 oder Polyetherpolyolen mit einer Funktionalität von 2 bis 6 und einem Molekulargewicht von 400 bis 8000 und gegebenenfalls
c) als Kettenverlängerungs- und/oder Vernetzungsmitteln Alkanolamine, Diole oder Triole mit einem Molekulargewicht kleiner als 400
in Gegenwart von
d) Treibmitteln,
e) Katalysatoren und gegebenenfalls
f) Hilfsmitteln und/oder Zusatzstoffen,
dadurch gekennzeichnet, daß man als Treibmittel (d) mindestens ein Vinylfluoralkan der Formel
CH₂=CH-CₙF₂ₙ₊₁
verwendet, in der n eine ganze Zahl von 1 bis 6 bedeutet.

2. Verfahren nach Anspruch 1, dadurch gekennzeichnet, daß die Vinylfluoralkane der Formel
CH2=CH-CₙF₂ₙ₊₁
in den Aufbaukomponenten (a), (b) und gegebenenfalls (c) oder in einer Mischung aus mindestens zwei dieser Aufbaukomponenten emulgiert sind.

3. Verfahren nach Anspruch 1, dadurch gekennzeichnet, daß man die Vinylfluoralkane der Formel
CH₂-CH=CₙF₂ₙ₋₁
in einer Menge von 1 bis 40 Gew.-Teilen, bezogen auf 100 Gew.-Teile der Aufbaukomponenten (a) und (b) oder (a) bis (c), verwendet.

4. Verfahren nach Anspruch 1, dadurch gekennzeichnet, daß man als Treibmittel Vinyl-perfluorisopropan, Vinyl-perfluor-n-butan oder Mischungen davon verwendet.

5. Verfahren zur Herstellung von Urethangruppen oder Urethan- und Isocyanuratgruppen enthaltenden Hartschaumstoffen durch Umsetzung von
a) organischen und/oder modifizierten organischen Polyisocyanaten mit
b) mindestens einer Verbindung mit mindestens zwei reaktiven Wasserstoffatomen, ausgewählt aus Polyetherpolyolen, Polyesterpolyolen, Polycarbonaten, Polyesteramiden oder Polyacetalen mit einer Funktionalität von 2 bis 8 und einer Hydroxylzahl von 150 bis 850, Polyesterpolyolen mit einer Funktionalität von 2 bis 3 und einem Molekulargewicht von 480 bis 3000 oder Polyetherpolyolen mit einer Funktionalität von 2 bis 6 und einem Molekulargewicht von 400 bis 8000 und gegebenenfalls
c) als Kettenverlängerungs- und/oder Vernetzungsmitteln Alkanolamine, Diole oder Triole mit einem Molekulargewicht kleiner als 400
in Gegenwart von
d) Treibmitteln
e) Katalysatoren und gegebenenfalls
f) Hilfsmitteln und/oder Zusatzstoffen,
dadurch gekennzeichnet, daß man als Treibmittel (d) Mischungen verwendet, die enthalten
di) mindestens ein Vinylfluoralkan der Formel
CH₂-CH=CₙF₂ₙ₊₁
in der n eine ganze Zahl von 1 bis 6 bedeutet, und
dii)mindestens ein weiteres, von (di) verschiedenes, physikalisch wirkendes und/oder chemisch wirkendes Treibmittel.

6. Verfahren nach Anspruch 5, dadurch gekennzeichnet, daß die physikalisch wirkenden Treibmittel (dii) ausgewählt sind aus der Gruppe der Alkane mit 4 bis 12 Kohlenstoffatomen,
Cycloalkane mit 4 bis 6 Kohlenstoffatomen,
linearen und cyclischen Ether mit 2 bis 5 Kohlenstoffatomen, alipathischen Carbonsäureester mit einem Siedepunkt von maximal 142°C,
alipathischen oder cycloalipathischen Ketone mit 3 bis 5 Kohlenstoffatomen,
teilhalogenierten Fluorchlorkohlenwasserstoffe mit 1 oder 2 Kohlenstoffatomen,
fluorierten oder perfluorierten, linearen oder cyclischen Ether mit 2 bis 12 Kohlenstoffatomen und
der fluorierten oder perfluorierten Kohlenwasserstoffe mit 3 bis 8 Kohlenstoffatomen.

7. Verfahren nach Anspruch 5, dadurch gekennzeichnet, daß die physikalisch wirkenden Treibmittel (dii) ausgewählt sind aus der Gruppe der fluorierten Kohlenwasserstoffe mit 4 bis 6 Kohlenstoffatomen, die mindestens ein Wasserstoffatom gebunden haben und der perfluorierten Kohlenwasserstoffe mit 4 bis 7 Kohlenstoffatomen und aus Mischungen davon.

8. Verfahren nach Anspruch 5, dadurch gekennzeichnet, daß die Treibmittelmischungen (d) die Vinylfluoralkane (di) und die weiteren, von (di) verschiedenen, physikalisch wirkenden Treibmittel (dii) im Gewichtsverhältnis von 90:10 bis 10:90 enthalten.

9. Verfahren nach Anspruch 5, dadurch gekennzeichnet, daß die Treibmittelmischung (d) aus (di) und den physikalisch wirkenden Treibmitteln (dii) in mindestens einer der Aufbaukomponenten (a), (b) oder (c) emulgiert wird.

10. Verfahren nach Anspruch 5, dadurch gekennzeichnet, daß die chemisch wirkenden Treibmittel ausgewählt sind aus der Gruppe, bestehend aus Wasser, Ameisensäure, organischen Mono- und Polycarbonsäuren mit einem Molekulargewicht von 60 bis 300, Ammonium- und Aminsalzen der Ameisensäure und/oder organischen Mono- und/oder Polycarbonsäuren mit einem Molekulargewicht von 60 bis 300 und Mischungen aus mindestens zwei dieser chemisch wirkenden Treibmittel.

11. Verfahren nach Anspruch 5, dadurch gekennzeichnet, daß man als Treibmittel Vinylfluoralkane der Formel
CH₂=CH-CₙF₂ₙ₊₁
in der n eine ganze Zahl von 1 bis 6 bedeutet, in Kombination mit Wasser verwendet.

12. Verfahren nach Anspruch 5, dadurch gekennzeichnet, daß die Treibmittelmischung (d), bezogen auf das Gesamtgewicht von (di) und (dii), enthält
di) mindestens 30 Gew.-% mindestens eines Vinylfluoralkans der Formel CH₂=CH-CₙF₂ₙ₊₁, in der n eine ganze Zahl von 1 bis 6 bedeutet, und
dii)maximal 70 Gew.-% mindestens eines weiteren physikalisch wirkenden und/oder chemischen Treibmittels.

13. Verfahren nach Anspruch 5, dadurch gekennzeichnet, daß die Treibmittelmischung (d), bestehend aus (di) und (dii) in einer Menge von 1 bis 40 Gew.-Teilen, bezogen auf 100 Gew.-Teile der Aufbaukomponenten (a) bis (c) oder (a) und (b), verwendet wird.

14. Treibmittelhaltige Emulsionen, die enthalten
mindestens ein Vinylfluoralkan der Formel
CH₂=CH-C₂F₂ₙ₊₁
in der n eine ganze Zahl von 1 bis 6 bedeutet (di), und
mindestens ein organisches und/oder modifiziertes organisches 5 Polyisocyanat (a) oder mindestens eine Verbindung mit mindestens zwei reaktiven Wasserstoffatomen, ausgewählt aus Polyetherpolyolen, Polyesterpolyolen, Polycarbonaten, Polyesteramiden oder Polyacetalen mit einer Funktionalität von 2 bis 8 und einer Hydroxylzahl von 150 bis 850 (b) oder mindestens ein Kettenverlängerungs- und/oder Vernetzungsmittel (c) mit einem Molekulargewicht kleiner als 400 oder eine Mischung aus (b) und (c).

15. Treibmittelhaltige Emulsionen, die bestehen aus
1 bis 40 Gew.-Teilen, bezogen auf 100 Gew.-Teile von (b) oder (b) und (c), eines oder mehrerer Vinylfluoralkane der Formel CH₂=CH-CₙF₂ₙ₊₁, in der n eine ganze Zahl von 1 bis 6 bedeutet (di),
0 bis 5 Gew.-Teilen, bezogen auf 100 Gew.-Teile von (b) oder (b) und (c), Wasser (dii),
0 bis 36 Gew.-Teilen, bezogen auf 100 Gew.-Teile von (b) oder (b) und (c), mindestens eines weiteren, von (di) verschiedenen, physikalisch wirkenden Treibmittels (dii) und
mindestens einer Verbindung mit mindestens zwei reaktiven Wasserstoffatomen, ausgewählt aus Polyetherpolyolen, Polyesterpolyolen, Polycarbonaten, Polyesteramiden oder Polyacetalen mit einer Funktionalität von 2 bis 8 und einer Hydroxylzahl von 150 bis 850, Polyesterpolyolen mit einer Funktionalität von 2 bis 3 und einem Molekulargewicht von 480 bis 3000 oder Polyetherpolyolen mit einer Funktionalität von 2 bis 6 und einem Molekulargewicht von 400 bis 8000 (b) und Kettenverlängerungs- und/oder Vernetzungsmitteln Alkanolamine, Diole oder Triole mit einem Molekulargewicht kleiner als 400 (c) oder Mischungen aus (b) und (c).

16. Treibmittelhaltige Emulsionen, die bestehen aus
1 bis 40 Gew.-Teilen, bezogen auf 100 Gew.-Teile von (b) oder (b) und (c), eines oder mehrerer Vinylfluoralkane der Formel CH₂=CH-CₙF₂ₙ₊₁ in der n eine ganze Zahl von 1 bis 6 bedeutet (di),
0 bis 5 Gew.-Teilen, bezogen auf 100 Gew.-Teile von (b) oder (b) und (c), Wasser (dii),
0 bis 36 Gew.-Teilen, bezogen auf 100 Gew.-Teile von (b) oder (b) und (c), mindestens einer fluorierten oder perfluorierten organischen Verbindung, die keine olefinisch ungesättigten Gruppen im Molekül gebunden enthält (dii) und
mindestens einer Verbindung mit mindestens zwei reaktiven Wasserstoffatomen, ausgewählt aus Polyetherpolyolen, Polyesterpolyolen, Polycarbonaten, Polyesteramiden oder Polyacetalen mit einer Funktionalität von 2 bis 8 und einer Hydroxylzahl von 150 bis 850, Polyesterpolyolen mit einer Funktionalität von 2 bis 3 und einem Molekulargewicht von 480 bis 3000 oder Polyetherpolyolen mit einer Funktionalität von 2 bis 6 und einem Molekulargewicht von 400 bis 8000 (b) und als Kettenverlängerungs- und/oder Vernetzungsmitteln Alkanolamine, Diole oder Triole mit einem Molekulargewicht kleiner als 400 (c) oder Mischungen aus (b) und (c).

17. Urethangruppen oder Urethan- und Isocyanuratgruppen enthaltende Hartschaumstoffe, die als Treibmittel mindestens ein Vinylfluoralkan der Formel
CH₂=CH-CₙF₂ₙ₊₁
in der n eine ganze Zahl von 1 bis 6 bedeutet, enthalten.

## Claims

1. A process for the production of rigid foams containing urethane groups or urethane and isocyanurate groups, by reacting
a) an organic and/or modified organic polyisocyanate with
b) at least one compound containing at least two reactive hydrogen atoms selected from polyether-polyols, polyester-polyols, polycarbonates, polyester-amides or polyacetals having a functionality of from 2 to 8 and a hydroxyl number of from 150 to 850, polyester-polyols having a functionality of from 2 to 3 and a molecular weight of from 480 to 3000 or polyether-polyols having a functionality of from 2 to 6 and a molecular weight of from 400 to 8000, and, if desired,
c) an alkanolamine, diol or triol having a molecular weight of less than 400 as chain extender and/or crosslinking agent,
in the presence of
d) a blowing agent,
e) a catalyst and, if desired,
f) assistants and/or additives,
wherein the blowing agent (d) used is at least one vinylfluoroalkane of the formula
CH₂=CH-Cₙf₂ₙ₊₁
in which n is an integer from 1 to 6.

2. A process as claimed in claim 1, wherein the vinylfluoroalkane of the formula
CH₂=CH-CₙF₂ₙ₊₁
is emulsified in the starting components (a), (b) and, if used, (c) or in a mixture of at least two of these starting components.

3. A process as claimed in claim 1, wherein the vinylfluoroalkane of the formula
CH₂=CH-CₙF₂ₙ₊₁
is used in an amount of from 1 to 40 parts by weight, based on 100 parts by weight of the starting components (a) and (b) or (a) to (c).

4. A process as claimed in claim 1, wherein the blowing agent used is vinylperfluoroisopropane, vinylperfluoro-n-butane, or a mixture thereof.

5. A process for the production of rigid foams containing urethane groups or urethane and isocyanurate groups, by reacting
a) an organic and/or modified organic polyisocyanate with
b) at least one compound containing at least two reactive hydrogen atoms selected from polyether-polyols, polyester-polyols, polycarbonates, polyester-amides or polyacetals having a functionality of from 2 to 8 and a hydroxyl number of from 150 to 850, polyester-polyols having a functionality of from 2 to 3 and a molecular weight of from 480 to 3000 or polyether-polyols having a functionality of from 2 to 6 and a molecular weight of from 400 to 8000, and, if desired,
c) as a chain extender and/or crosslinking agent, an alkanolamine, diol or triol having a molecular weight of less than 400 as
in the presence of
d) a blowing agent,
e) a catalyst and, if desired,
f) assistants and/or additives,
wherein the blowing agent (d) used is a mixture which contains
di) at least one vinylfluoroalkane of the formula
CH₂=CH-CₙF₂ₙ₊₁
in which n is an integer from 1 to 6, and
dii) at least one further physical and/or chemical blowing agent which is different from (di).

6. A process as claimed in claim 5, wherein the physical blowing agent (dii) is selected from the group comprising
alkanes having 4 to 12 carbon atoms,
cycloalkanes having 4 to 6 carbon atoms,
linear or cyclic ethers having 2 to 5 carbon atoms, aliphatic carboxylic acid esters having a maximum boiling point of 142°C,
aliphatic or cycloaliphatic ketones having 3 to 5 carbon atoms,
partially halogenated chlorofluorocarbons having 1 or 2 carbon atoms,
fluorinated or perfluorinated, linear or cyclic ethers having 2 to 12 carbon atoms and
fluorinated or perfluorinated hydrocarbons having 3 to 8 carbon atoms.

7. A process as claimed in claim 5, wherein the physical blowing agent (dii) is selected from the group comprising fluorinated hydrocarbons having 4 to 6 carbon atoms and at least one bonded hydrogen atom, and perfluorinated hydrocarbons having 4 to 7 carbon atoms, and mixtures thereof.

8. A process as claimed in claim 5, wherein the blowing agent mixture (d) contains the vinylfluoroalkane (di) and the further physical blowing agent (dii) which is different from (di) in a weight ratio of from 90:10 to 10:90.

9. A process as claimed in claim 5, wherein the blowing agent mixture (d) comprising (di) and the physical blowing agent (dii) is emulsified in at least one of the starting components (a), (b) and (c).

10. A process as claimed in claim 5, wherein the chemical blowing agent is selected from the group comprising water, formic acid, organic mono- and polycarboxylic acids having a molecular weight of from 60 to 300, ammonium salts and amine salts of formic acid and/or organic mono- and/or polycarboxylic acids having a molecular weight of from 60 to 300, and mixtures of at least two of these chemical blowing agents.

11. A process as claimed in claim 5, wherein the blowing agent used is a vinylfluoroalkane of the formula
CH₂=CH-CₙF₂ₙ₊₁
in which n is an integer from 1 to 6, in combination with water.

12. A process as claimed in claim 5, wherein the blowing agent mixture (d) contains, based on the total weight of (di) and (dii),
di) at least 30% by weight of at least one vinylfluoroalkane of the formula CH₂=CH-CₙF₂ₙ₊₁ in which n is an integer from 1 to 6, and
dii) a maximum of 70% by weight of at least one further physical and/or chemical blowing agent.

13. A process as claimed in claim 5, wherein the blowing agent mixture (d), comprising (di) and (dii), is used in an amount of from 1 to 40 parts by weight, based on 100 parts by weight of the starting components (a) to (c) or (a) and (b).

14. A blowing agent-containing emulsion which contains
at least one vinylfluoroalkane of the formula
CH₂=CH-CₙF₂ₙ₊₁
in which n is an integer from 1 to 6, (di), and
at least one organic and/or modified organic polyisocyanate (a) or at least one compound (b) containing at least two reactive hydrogen atoms selected from polyether-polyols, polyester-polyols, polycarbonates,
polyester-amides or polyacetals having a functionality of from 2 to 8 and a hydroxyl number of from 150 to 850, or at least one chain extender and/or crosslinking agent (c) having a molecular weight of less than 400, or a mixture of (b) and (c).

15. A blowing agent-containing emulsion which comprises
from 1 to 40 parts by weight, based on 100 parts by weight of (b) or (b) and (c), of one or more vinylfluoroalkanes of the formula CH₂=CH-CₙF₂ₙ₊₁ in which n is an integer from 1 to 6, (di),
from 0 to 5 parts by weight, based on 100 parts by weight of (b) or (b) and (c), of water, (dii),
from 0 to 36 parts by weight, based on 100 parts by weight of (b) or (b) and (c), of at least one further physical blowing agent (dii) which is different from (di), and
at least one compound (b) containing at least two reactive hydrogen atoms selected from polyether-polyols, polyester-polyols, polycarbonates, polyester-amides or polyacetals having a functionality of from 2 to 8 and a hydroxyl number of from 150 to 850, polyester-polyols having a functionality of from 2 to 3 and a molecular weight of from 480 to 3000 or polyether-polyols having a functionality of from 2 to 6 and a molecular weight of from 400 to 8000, and an alkanolamine, diol or triol having a molecular weight of less than 400, (c), or a mixture of (b) and (c) as chain extender and/or crosslinking agent.

16. A blowing agent-containing emulsion which comprises
from 1 to 40 parts by weight, based on 100 parts by weight of (b) or (b) and (c), of one or more vinylfluoroalkanes of the formula CH₂=CH-CₙF₂ₙ₊₁ in which n is an integer from 1 to 6, (di),
from 0 to 5 parts by weight, based on 100 parts by weight of (b) or (b) and (c), of water, (dii),
from 0 to 36 parts by weight, based on 100 parts by weight of (b) or (b) and (c), of at least one fluorinated or perfluorinated organic compound which contains no bonded olefinically unsaturated groups in the molecule, (dii), and
at least one compound (b) containing at least two reactive hydrogen atoms selected from polyether-polyols, polyester-polyols, polycarbonates, polyester-amides or polyacetals having a functionality of from 2 to 8 and a hydroxyl number of from 150 to 850, polyester-polyols having a functionality of from 2 to 3 and a molecular weight of from 480 to 3000 or polyether-polyols having a functionality of from 2 to 6 and a molecular weight of from 400 to 8000, and an alkanolamine, diol or triol having a molecular weight of less than 400, (c), or a mixture of (b) and (c).

17. A rigid foam containing urethane groups or urethane and isocyanurate groups and containing, as blowing agent, at least one vinylfluoroalkane of the formula
CH₂=CH-CₙF₂ₙ₊₁
in which n is an integer from 1 to 6.

## Revendications

1. Procédé de préparation de mousses dures contenant des radicaux uréthanne ou des radicaux uréthanne et isocyanate, par la réaction
a) de polyisocyanates organiques et/ou organiques modifiés, avec
b) au moins un composé avec au moins 2 atomes d'hydrogène réactifs, choisi parmi les polyétherpolyols, les polyesterpolyols, les polycarbonates, les polyesteramides ou les polyacétals, avec une fonctionnalité de 2 à 8 et un indice d'hydroxyle de 150 à 850, des polyesterpolyols avec une fonctionnalité de 2 à 3 et un poids moléculaire de 480 à 3000, ou des polyétherpolyols, avec une fonctionnalité de 2 à 6 et un poids moléculaire de 400 à 8000 et, éventuellement,
c) à titre d'agents d'allongement des chaînes et/ou de réticulation, des alcanolamines, des diols ou des triols, avec un poids moléculaire inférieur à 400,
en présence de
d) des agents porogènes,
e) des catalyseurs et, éventuellement,
f) des adjuvants et/ou des additifs,
caractérisé en ce que, à titre d'agents porogènes (d), on utilise au moins un vinylfluoralcane de la formule
CH₂=CH-CₙF₂ₙ₊₁
dans laquelle n représente un nombre entier dont la valeur varie de 1 à 6.

2. Procédé suivant la revendication 1, caractérisé en ce que les vinylfluoralcanes de la formule
CH₂=CH-CₙF₂ₙ₊₁
sont émulsionnés dans les composants constitutifs (a), (b) et éventuellement (c), ou dans un mélange d'au moins deux de ces composants constitutifs.

3. Procédé suivant la revendication 1, caractérisé en ce que l'on utilise les vinylfluoralcanes de la formule
CH₂=CH-CₙF₂ₙ₊₁
en une proportion de 1 à 40 parties en poids, par rapport à 100 parties en poids des composants constitutifs (a) et (b), ou (a) à (c).

4. Procédé suivant la revendication 1, caractérisé en ce que l'on utilise le vinyl-perfluorisopropane, le vinyl-perfluoro-n-butane, ou des mélanges de ceux-ci, à titre d'agents porogènes.

5. Procédé de préparation de mousses dures contenant des radicaux uréthanne, ou des radicaux uréthanne et isocyanurate, par la réaction
a) de polyisocyanates organiques et/ou organiques modifiés avec
b) au moins un composé avec au moins deux atomes d'hydrogène réactifs, choisi parmi les polyétherpolyols, les polyesterpolyols, les polycarbonates, les polyesteramides ou les polyacétals, avec une fonctionnalité de 2 à 8 et un indice d'hydroxyle de 150 à 850, des polyesterpolyols, avec une fonctionnalité de 2 à 3 et un poids moléculaire de 480 à 3000, ou des polyétherpolyols, d'une fonctionnalité de 2 à 6 et d'un poids moléculaire de 400 à 8000 et, éventuellement,
c) à titre d'agents d'allongement des chaînes et/ou de réticulation, des alcanolamines, des diols ou des triols, d'un poids moléculaire inférieur à 400,
en présence de
d) des agents porogènes,
e) des catalyseurs et, éventuellement,
f) des adjuvants et/ou des additifs,
caractérisé en ce que l'on utilise, à titre d'agents porogènes (d), des mélanges qui contiennent
di) au moins un vinylfluoralcane de la formule
CH₂= CH-CₙF₂ₙ₊₁
dans laquelle n représente un nombre entier dont la valeur varie de 1 à 6, et
dii) au moins un agent porogène agissant par effet physique et/ou agissant par effet chimique, différent de (di).

6. Procédé suivant la revendication 5, caractérisé en ce que les agents porogènes agissant par effet physique (dii) sont choisis dans le groupe formé par les alcanes qui comportent de 4 à 12 atomes de carbone,
les cycloalcanes qui comportent de 4 à 6 atomes de carbone,
les éthers linéaires et cycliques qui comportent de 2 à 5 atomes de carbone,
les esters d'acides carboxyliques aliphatiques qui possèdent un point d'ébullition d'au maximum 142°C, les cétones aliphatiques et cycloaliphatiques qui comportent de 3 à 5 atomes de carbone,
les hydrocarbures fluorochlorés partiellement halogénés qui comportent 1 ou 2 atomes de carbone,
les éthers linéaires ou cycliques, fluorés ou perfluorés, qui comportent de 2 à 12 atomes de carbone et
les hydrocarbures fluorés ou perfluorés, qui comportent de 3 à 8 atomes de carbone.

7. Procédé suivant la revendication 5, caractérisé en ce que les agents porogènes agissant par effet physique (dii) sont choisis dans le groupe formé par les hydrocarbures fluorés comportant de 4 à 6 atomes de carbone, qui possèdent au moins un atome d'hydrogène lié et les hydrocarbures perfluorés qui comportent de 4 à 7 atomes de carbone et les mélanges de ceux-ci.

8. Procédé suivant la revendication 5, caractérisé en ce que les mélanges d'agents porogènes (d) contiennent les vinylfluoralcanes (di) et les autres agents porogènes (dii) agissant par effet physique, différents de (di), dans le rapport pondéral de 90:10 à 10:90.

9. Procédé suivant la revendication 5, caractérisé en ce que le mélange d'agents porogènes (d) constitué de (di) et des agents porogènes (dii) agissant par effet physique sont émulsionnés dans au moins l'un des composants constitutifs (a), (b) ou (c).

10. Procédé suivant la revendication 5, caractérisé en ce que les agents porogènes agissant par effet chimique sont choisis dans le groupe formé par l'eau, l'acide formique, des acides monocarboxyliques et polycarboxyliques, d'un poids moléculaire de 60 à 300, les sels d'ammonium et d'amine de l'acide formique et/ou des acides monocarboxyliques et/ou polycarboxyliques organiques d'un poids moléculaire de 60 à 300 et des mélanges d'au moins deux de ces agents porogènes agissant par effet chimique.

11. Procédé suivant la revendication 5, caractérisé en ce que l'on utilise, à titre d'agents porogènes, des vinylfluoralcanes de la formule
CH₂=CH-CₙF₂ₙ₊₁
dans laquelle n représente un nombre entier dont la valeur varie de 1 à 6, en combinaison avec de l'eau.

12. Procédé suivant la revendication 5, caractérisé en ce que le mélange des agents porogènes (d) contient, par rapport au poids total de (di) et de (dii),
di) au moins 30 % en poids d'un vinylfluoralcane de la formule CH₂=CH-CₙF₂ₙ₊₁, dans laquelle n représente un nombre entier dont la valeur varie de 1 à 6, et
dii) au maximum 70 % en poids d'au moins un autre agent porogène agissant par effet physique et/ou agissant par effet chimique.

13. Procédé suivant la revendication 5, caractérisé en ce que le mélange des agents porogènes (d), constitué de (di) et de (dii), s'utilise en une proportion de 1 à 40 parties en poids, par rapport à 100 parties en poids des composants constitutifs (a) à (c), ou (a) et (b).

14. Emulsions à agents porogènes, qui contiennent
au moins un vinylfluoralcane de la formule
CH₂=CH-CₙF₂ₙ₊₁
dans laquelle n représente un nombre entier dont la valeur varie de 1 à 6 (di), et
au moins un polyisocyanate organique et/ou organique modifié (a), ou au moins un composé avec au moins deux atomes d'hydrogène réactifs, choisi parmi les polyétherpolyols, les polyesterpolyols, les polycarbonates, les polyesteramides ou les polyacétals, d'une fonctionnalité de 2 à 8 et d'un indice d'hydroxyle de 150 à 850, (b) ou au moins un agent d'allongement des chaînes et/ou de réticulation (c), d'un poids moléculaire inférieur à 400, ou un mélange de (b) et de (c).

15. Emulsions à agents porogènes, qui se composent de
1 à 40 parties en poids, par rapport à 100 parties en poids de (b), ou de (b) et (c), d'un ou plusieurs vinylfluoralcanes de la formule CH₂=CH-CₙF₂ₙ₊₁, dans laquelle n représente un nombre entier dont la valeur varie de 1 à 6 (di),
0 à 5 parties en poids, par rapport à 100 parties en poids de (b), ou de (b) et (c), d'eau (dii),
0 à 36 parties en poids, par rapport à 100 parties en poids de (b), ou de (b) et (c), d'au moins un agent porogène supplémentaire (dii) agissant par effet physique, différent de (di) et d'au moins un composé avec au moins deux atomes d'hydrogène réactifs, choisi parmi les polyétherpolyols, les polyesterpolyols, les polycarbonates, les polyesteramides ou les polyacétals, d'une fonctionnalité de 2 à 8 et d'un indice d'hydroxyle de 150 à 850, les polyesterpolyols, d'une fonctionnalité de 2 à 3 et d'un poids moléculaire de 480 à 3000, ou les polyétherpolyols, d'une fonctionnalité de 2 à 6 et d'un poids moléculaire de 400 à 8000 (b) et, à titre d'agents d'allongement des chaînes et/ou de réticulation, des alcanolamines, des diols ou des triols, d'un poids moléculaire inférieur à 400 (c), ou des mélanges de (b) et (c).

16. Emulsions à agents porogènes, qui se composent de
1 à 40 parties en poids, par rapport à 100 parties en poids de (b), ou de (b) et (c), d'un ou plusieurs vinylfluoralcanes de la formule CH₂=CH-CₙF₂ₙ₊₁, dans laquelle n représente un nombre entier dont la valeur varie de 1 à 6 (di),
0 à 5 parties en poids, par rapport à 100 parties en poids de (b), ou de (b) et (c), d'eau (dii),
0 à 36 parties en poids, par rapport à 100 parties en poids de (b), ou de (b) et (c), d'au moins un composé organique, fluoré ou perfluoré, qui ne contient pas de groupes oléfiniquement insaturés dans sa molécule (dii) et
au moins un composé avec au moins deux atomes d'hydrogène réactifs, choisi parmi les polyétherpolyols, les polyesterpolyols, les polycarbonates, les polyesteramides ou les polyacétals, d'une fonctionnalité de 2 à 8 et d'un indice d'hydroxyle de 150 à 850, les polyesterpolyols, d'une fonctionnalité de 2 à 3 et d'un poids moléculaire de 480 à 3000, ou les polyétherpolyols, d'une fonctionnalité de 2 à 6 et d'un poids moléculaire de 400 à 8000 (b) et, à titre d'agents d'allongement des chaînes et/ou de réticulation, des alcanolamines, des diols ou des triols, d'un poids moléculaire inférieur à 400 (c), ou des mélanges de (b) et (c).

17. Mousses dures contenant des radicaux uréthanne ou des radicaux uréthanne et isocyanurate, qui contiennent, à titre d'agent porogène, au moins un vinylfluoralcane de la formule
CH₂=CH-CₙF₂ₙ₊₁
dans laquelle n représente un nombre entier dont la valeur varie de 1 à 6.
